# EUROPÄISCHE PATENTSCHRIFT

(11) **EP 0 803 472 B1**
(45) Veröffentlichungstag und Bekanntmachung des Hinweises auf die Patenterteilung: **09.08.2000**
(21) Anmeldenummer: 97106950.5
(22) Anmeldetag: 25.04.1997
(51) Int. Cl.: C02F 1/32, A61L 2/10, B01J 19/12

(54) **UV-Reaktor zur Einstrahlung von ultraviolettem Licht in ein Reaktionsmedium**
UV-Reaktor for radiating a reaction medium
Réacteur à UV pour irradier un milieu réactionnel

(30) Priorität: 26.04.1996 DE 29607581 U
(43) Veröffentlichungstag der Anmeldung: 29.10.1997
(73) Patentinhaber: a.c.k. aqua concept GmbH Karlsruhe, 76189 Karlsruhe (DE)
(72) Erfinder: Popp, Hans-Peter, 82335 Berg (DE)
(74) Vertreter: Trappenberg, Hans

(56) Entgegenhaltungen:
- DE-A- 3 117 473
- DE-A- 3 710 555
- DE-A- 3 924 349
- PATENT ABSTRACTS OF JAPAN vol. 012, no. 056 (C-477), 19.Februar 1988 & JP 62 201639 A (SUMITOMO ELECTRIC IND LTD), 5.September 1987,

## Beschreibung

Die Erfindung betrifft einen UV-Reaktor zur Einstrahlung von ultraviolettem Licht in ein Reaktionsmedium nach dem Oberbegriff des Anspruchs1, mit einem Gehäuse, welches einen rohrförmigen Hohlraum hat, in welchem ein ultraviolettes Licht durchlässiges Rohr angeordnet ist, in welchem eine ultraviolettes Licht abgebende Quelle angeordnet ist, wobei der zwischen der Wandung des Hohlraums und dem Rohr ausgebildete Ringraum wenigstens einen Einlaß und einen Auslaß für das Reaktionsmedium aufweist.

Ein derartiger Reaktor wird üblicherweise für die UV-Oxydation von organisch belasteten Wässern in Verbindung mit Wasserstoffperoxyd eingesetzt. Ein UV-Ringspaltreaktor üblicher Bauart besteht aus einem röhrenförmigen Metallgehäuse, in das ein, einen stabförmigen UV-Strahler enthaltendes Quarzrohr eingelassen ist, so daß ein ringspaltförmiger Raum gebildet wird, den das Reaktionsmedium durchströmt. Das Quarzrohr ist auf der einen Seite geschlossen und sein Durchmesser ist sehr klein, da er regelmäßig lediglich um den Faktor 2 bis 4 größer als der Durchmesser des UV-Strahlers ist. Die Ein- und Auslässe des Reaktionsmediums sind bei herkömmlichen Ringspaltreaktoren axial oder radial auf das Gehäuse aufgesetzt.

Bei dem bekannten Reaktor fließt das Reaktionsmedium im wesentlichen in axialer Richtung durch den Ringraum. Dies ist im Hinblick auf einen guten Stoffaustausch nicht sehr vorteilhaft. Des weiteren ist einerseits das Reaktionsvolumen in das der Quarzrohrdurchmesser linear eingeht, sehr klein und andererseits ist die Wärmebelastung von Quarzrohren kleiner Durchmesser hoch, so daß mit einer starken Belagbildung gerechnet werden muß.

Aus der DE-3924349 A1 ist ein Entkeimungsgerät für Flüssigkeiten bekannt, mit einem koaxial von einem Glasrohr und einem Reflektorrohr umgebenen UV-Strahler und mit tangential angeordnetem Ein- und Auslaufrohr, welche in den zwischen Glasrohr und Relflektorrohr gebildeten Ringraum münden, wobei sich das Einlaufrohr zum Ringraum hin zu einer Einlaufdüse verjüngt.

Des weiteren ist aus der DE 3117473 A1 ein Entkeimungsgerät bekannt, mit einem koaxial von einem Quarzschutzrohr und einem Reflektorrohr umgebenen UV-Strahler und mit tangential angeordnetem Ein- und Auslaß. Der Einlaß und der Auslaß sind in Richtung desselben Drehsinns angeordnet.

Bei den bekannten Vorrichtungen wird die zu behandelnde Flüssigkeit zwar tangential in einen Reaktionsraum eingeleitet, wodurch sie eine Bewegung um die Achse des Reaktionsraums durchführt, jedoch sind keine besonderen Maßnahmen vorgesehen, durch welche die Flüssigkeit eine Geschwindigkeitskompenente in axialer Richtung erhält.

Dem patent abstracts of japan JP-A 62201639 kann entnommen werden, daß ein Gehäuse Wärmestrahlung (Strahlung größerer Wellenlänge) durchläßt, wohingegen es Wellen kürzerer UV-Wellenlänge reflektiert.

Es ist Aufgabe der Erfindung einen eingangs genannten UV-Ringspaltreaktor derart auszubilden, daß der Stoffaustausch verbessert ist.

Die Lösung dieser Aufgabe ergibt sich aus den Merkmalen des kennzeichnenden Teils des Anspruchs 1. Vorteilhafte Weiterbildungen ergeben sich aus den Unteransprüchen.

Gemäß der Erfindung ist der Einlaß so ausgebildet, daß das Reaktionsmedium tangential in den Ringraum eintritt. Durch den tangentialen Eintritt des Reaktionsmediums in den Ringraum führt das Reaktionsmedium im Ringraum eine Rotationsströmung aus. Bei einem vom Einlaß in axialer Richtung versetzten Auslaß gelangt das Reaktionsmedium spiralförmig zum Auslaß. Hierdurch wird der Stoffaustausch wesentlich verbessert

Besonders vorteilhaft ist es, wenn der Einlaß und der Auslaß in Richtung desselben Drehsinns angeordnet sind. Hierdurch kann das Reaktionsmedium vollständig in spiralförmiger Form durch den Reaktor fließen. Dies ist besonders günstig für einen geringen Strömungswiderstand. Der Einlaß oder der Auslaß können auch so ausgebildet sein, daß sich ihr für den Durchfluß des Reaktionsmediums wirksamer Querschnitt verändern läßt. Dadurch läßt sich die Strömungsgeschwindigkeit einstellen, mit der das Reaktionsmedium durch den Reaktor fließt. Es ist somit möglich, daß bei gegebener Verweilzeit die Strömungsgeschwindigkeit erhöht wird, wodurch der Stoffaustausch wesentlich verbessert wird.

Besonders günstig für eine effektive Rotationsströmung ist es, wenn sich der Einlaß und der Auslaß im Bereich entgegengesetzter Stirnseiten des Ringraums befinden. Dies wird in besonders günstiger Weise dadurch erreicht, daß im Bereich der Stirnseiten des Ringraums Anschlußelemente angeordnet sind, in welchen der Einlaß beziehungsweise der Auslaß angeordnet sind.

Die Anschlußelemente sind als Flansche ausgebildet, welche den Ringraum stimseitig begrenzen.

Durch die erfindungsgemäße Anordnung ist es in vorteilhafter Weise möglich, die Lage des Ein- und des Auslasses zueinander einzustellen. So können Einlaß und Auslaß beispielsweise in dieselbe radiale Richtung weisen, ohne daß eine abrupte Umlenkung der Strömungsrichtung des Reaktionsmediums erfolgt. Selbstverständlich können Einlaß und Auslaß auch in eine um 180 Grad versetzte radiale Richtung weisen. Die Flansche brauchen zur Einstellung der Lage des Ein- beziehungsweise Auslasses zueinander lediglich auf den Röhren in Richtung des Umfangs verdreht werden.

Der Einlaß beziehungsweise der Auslaß kann in einen im jeweiligen Anschlußelement eingearbeiteten Verdrängungsspalt einmünden. Hierdurch kann der UV-Reaktor so aufgebaut sein, daß zwischen zwei Flanschen mit eingearbeiteter Strömungsführung ein, von den Flanschen gehaltener UV-Strahler eingefügt ist, der von zwei Röhren großen Durchmessers konzentrisch umgeben wird, so daß diese Röhren, den stirnseitig von den beiden Flanschen abgedichteten Verdrängungsspalt bilden, durch den das Reaktionsmedium geleitet wird. Besonders vorteilhaft ist es, wenn die beiden Flansche identisch ausgebildet sind, da hierdurch zum einen eine kostengünstige Herstellung erfolgen kann und zum anderen der Reaktor bezüglich des Medienein- und austritts eine strömungstechnische Symmetrie aufweist.

Durch den spiralförmigen Durchfluß des Reaktionsmediums durch den Reaktor wird in vorteilhafter Weise die Verweilzeit des Reaktionsmediums im Reaktor von seiner Strömungsgeschwindigkeit entkoppelt. Damit gelingt die Erhöhung der Strömungsgeschwindigkeit bei konstanter oder sogar zunehmender Verweilzeit. Dies begünstigt das Auftreten von geschwindigkeitsabhängigen Turbulenzen. Beim erfindungsgemäß ausgebildeten Reaktor findet durch Turbulenzen bedingt ein stetiger Austausch des Reaktionsmediums in radialer Richtung statt.

Durch die erfindungsgemäße Ausbildung eines UV-Reaktors kann erreicht werden, daß das ultraviolettes Licht durchlässige Rohr einen relativ großen Rohrdurchmesser aufweist. Hierdurch erhöht sich das Reaktionsvolumen, welches sich aus dem Rohrdurchmesser, der Eindringtiefe der UV-Strahlung in das Reaktionsmedium und der Reaktorlänge ergibt. Des weiteren reduziert sich durch den vergrößerten Rohrdurchmesser die Wärmebelastung des Rohrs, wodurch eine Belagbildung auf der Rohroberfläche vermieden wird.

Dadurch, daß in die beiden Flansche ein Verdrängungsspalt eingearbeitet ist, der das in den Eintrittsflansch eintretende Reaktionsmedium in eine Rotationsbewegung versetzt wird das Reaktionsmedium über den gesamten Kreisumfang des ringförmigen Reaktionsraums gleichmäßig verteilt, so daß nach dessen Durchströmung der Verdrängungsspalt des Austrittsflansches das Reaktionsmedium sammeln kann, wonach es durch den Auslaß den Reaktor wieder verläßt.

Bei einer weiteren besonderen Ausführungsform der Erfindung ist vorgesehen, daß sich der Querschnitt des Verdrängungsspalts in Richtung des Umfangs, das heißt, im Verfauf des Verdrängungsspaltes verringert. Die Verringerung des Querschnitts erfolgt in vorteilhafter Weise kontinuierlich im Verlauf des gesamten Winkels von 2 pi des Verdrängungsspalts. Hierdurch findet eine Verdrängung des Reaktionsmediums in seitlicher Richtung statt, wodurch der spiralförmige Verlauf des Reaktionsmediums um die ultraviolettes Licht abgebende Quelle begünstigt wird. Der Querschnitt des Verdrängungsspalts kann jedoch im Verlauf des gesamten Winkels von 2 pi konstant bleiben, wenn dies vorteilhaft sein sollte. Der Querschnitt des Ringspalts kann beispielsweise aber auch zunächst kontinuierlich bis zu einem bestimmten Winkel abnehmen und danach wieder zunehmen. Ein derartiger Verlauf läßt sich fertigungstechnisch besonders leicht herstellen, da er durch zwei exzentrisch zueinander angeordnete Kreise beschrieben wird.

In besonders vorteilhafter Weise besteht das ultraviolettes Licht durchlässige Rohr aus Quarzglas. Hierdurch wird erreicht, daß UV-Strahlung auch kleinerer Wellenlänge von dem Rohr durchgelassen wird. Dies ist besonders günstig für die UV-Oxydation.

Bei einer weiteren Ausführungsform der Erfindung ist vorgesehen, daß die Wandung des Hohlraums des Gehäuses mit einem UV-Strahlung reflektierenden Material beschichtet ist. Hierdurch wird in vorteilhafter Weise erreicht, daß UV-Strahlung, welche an die Wandung des Hohlraums des Gehäuses gelangt, wieder in den Reaktionsraum zurückgeworfen wird. Hierdurch wird die UV-Strahlung sehr gut ausgenutzt.

Eine gute Ausnutzung der UV-Strahlung könnte auch dadurch erreicht werden, daß das Gehäuses aus einem Material gefertigt ist, welches UV-Strahlung auch kleinerer Wellenlänge passieren läßt, wobei dann die Außenfläche des Gehäuses mit einem die UV-Strahlung reflektierenden Material beschichtet ist.

Bei einer weiteren besonderen Ausführungsform der Erfindung ist vorgesehen, daß das Gehäuse aus einem Material besteht, welches Strahlung ausschließlich größerer Wellenlänge durchläßt. Da längerwelliges Licht Wärmestrahlung ist, wird hierdurch erreicht, daß diese durch das Gehäuse hindurchtritt, wodurch die äquivalente Energie in Form von fühlbarer Wärme nicht in das Reaktionsmedium eingebunden wird.

Das Gehäuse kann jedoch auch aus Metall oder Kunststoff bestehen, wenn dies vorteilhaft sein sollte.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
Figur 1 einen UV-Reaktor in perspektivischer Ansicht,
Figur 2 den in Figur 1 gezeigten UV-Reaktor im Schnitt durch das Zentrum des UV-Reaktors,
Figur 3 ein Anschlußelement im Schnitt und
Figur 4 einen UV-Reaktor in perspektivischer Ansicht mit stirnseitig geöffnetem Rohr.

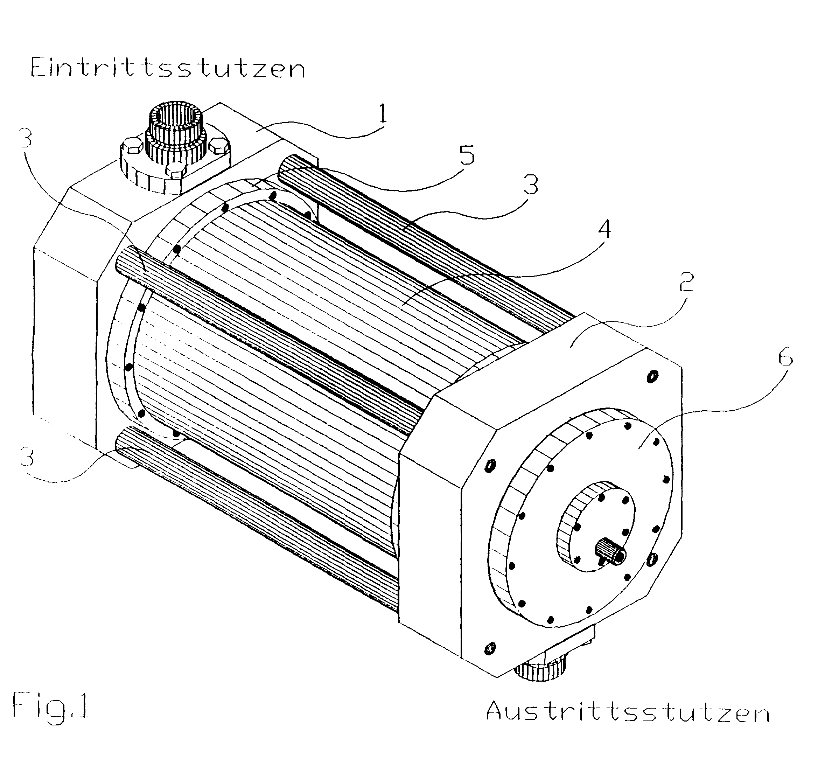

In Figur 1 ist der zusammengebaute UV-Reaktor in perspektivischer Ansicht zu sehen. Das Reaktionsmedium tritt durch einen Einlaß 17 in den Reaktor ein und verläßt ihn nach einer fotochemischen Reaktion durch eine Auslaß 18. Der Reaktor wird durch zwei als Flansche ausgebildete Anschlußelemente 1, 2 stimseitig begrenzt. Beide Flansche 1, 2 sind durch insgesamt vier Querstreben 3 (drei davon sind sichtbar) starr und biegesteif miteinander verschraubt. Mit 4 ist eine als Gehäuse 4 ausgebildete äußere Röhre bezeichnet, welche einen ringspaltförmigen Reaktionsraum 8 nach außen begrenzt. Die Röhre 4 wird mit Hilfe eines Rings 5 in den Anschlußelementen 1, 2 eingedichtet. Ein Deckel 6 verschließt gasdicht eine Durchbruchsbohrung 15, hinter welcher sich frei zugänglich ein UV-Strahler 19 befindet.

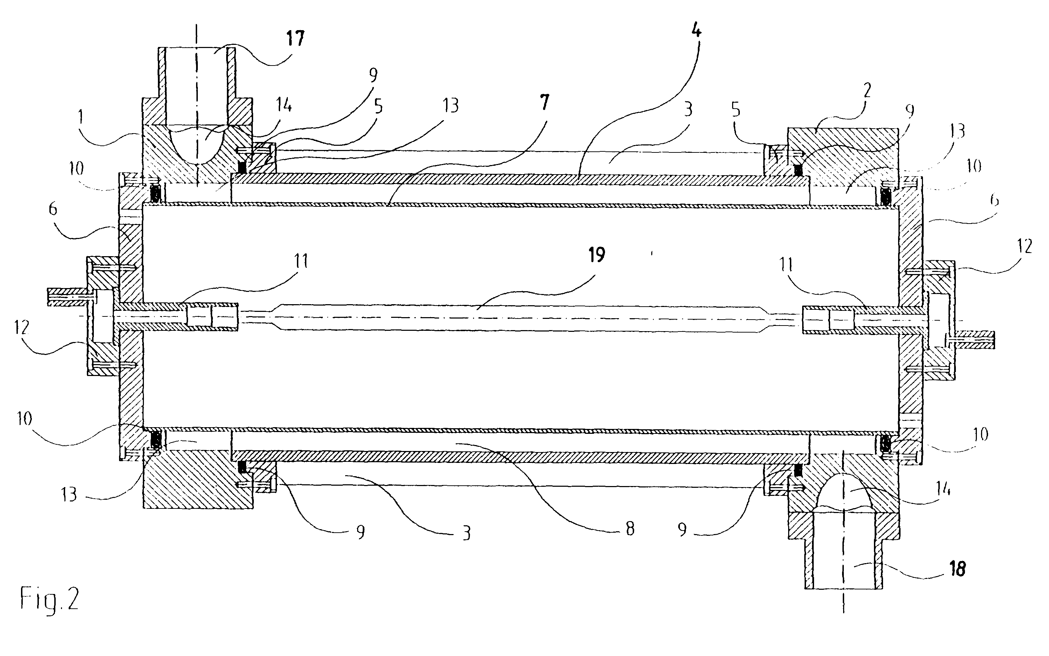

Figur 2 zeigt einen Schnitt durch die Achse des Reaktors. Zwischen den zwei Flanschen 1, 2 befinden sich eine innere Röhre 7 und das als äußere Röhre ausgebildete Gehäuse 4. Die Röhren 7, 4 begrenzen den ringspaltförmigen Reaktionsraum 8, der beidseitig in einen Verdrängungsspalt 13 übergeht. Der Verdrängungsspalt 13 ist über eine Bohrung 14 mit dem Einlaß 17 beziehungsweise mit dem Auslaß 18 verbunden. Die Flansche 1, 2 sind mit den Querstreben 3 gegeneinander verschraubt. Die Ringe 5 dichten zusammen mit O-Ringen 9 die äußere Röhre 4 gegen die Flansche 1, 2 ab, während die Deckel 6 zusammen mit O-Ringen 10 die innere Röhre 7 abdichten und gleichzeitig die Durchbruchsbohrungen 15 in den Flanschen 1, 2 verschließen. Lampenhalter 11 sind mittels einer gut wärmeleitenden Verbindung in die Deckel 6 eingelassen und werden mit Hauben 12 fixiert. Die Lampenhalter 11 umfassen die Lampe 19 an deren Sockel und halten diese dadurch.

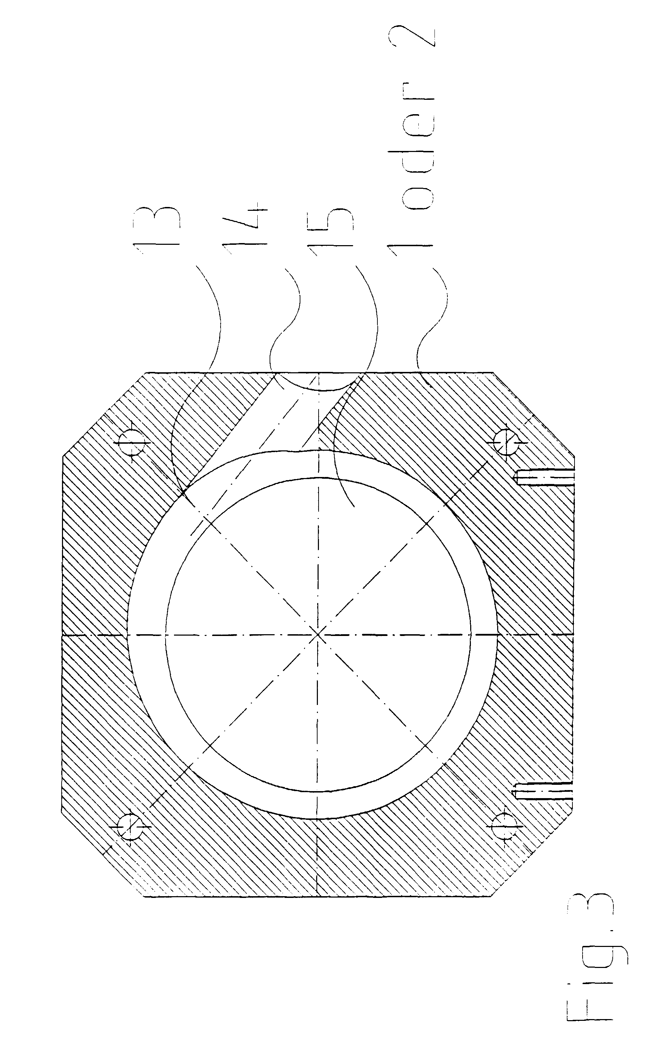

Figur 3 zeigt einen senkrecht zur Reaktorachse verlaufenden Schnitt durch einen der beiden Flansche 1, 2. Die Flansche sind identisch ausgebildet. Dargestellt ist eine Bohrung 14, welche in den Verdrängungsspalt 13 übergeht. Das Reaktionsmedium tritt über die Bohrung 14 in den Verdrängungsspalt 13 ein und wird von diesem durch seinen leicht verjüngenden Querschnitt in den Reaktionsraum 8 überführt.

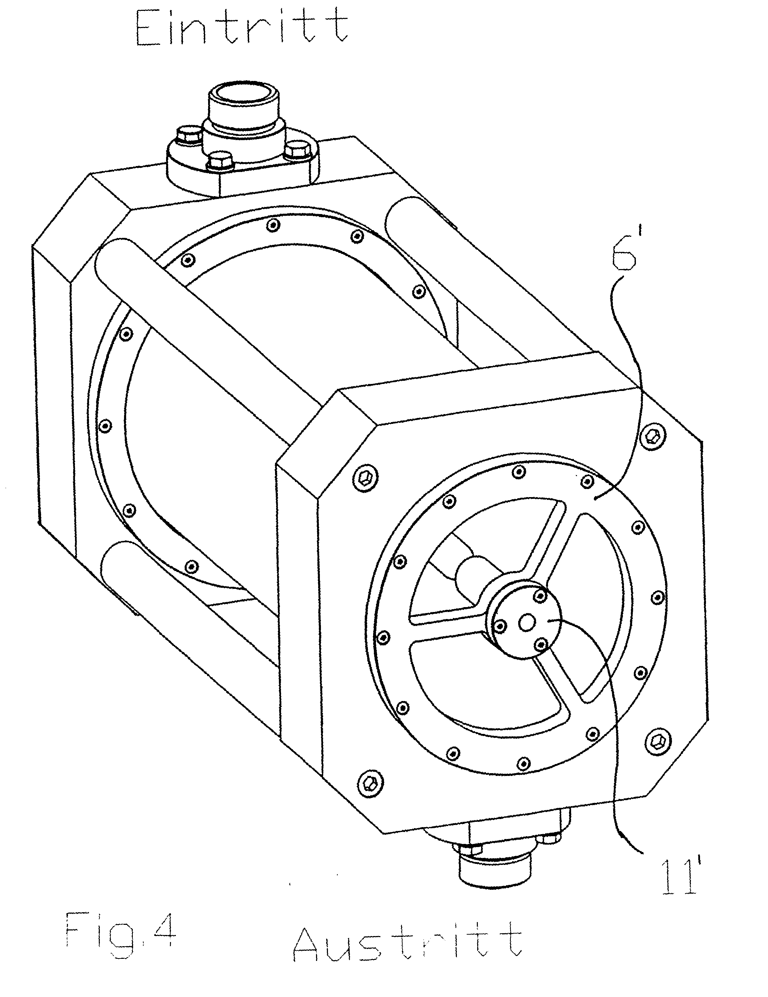

Figur 4 zeigt ein weiteres Ausführungsbeispiel das sich von dem in Figur 1 gezeigten Ausführungsbeispiel durch einen durchbrochenen Deckel 6' unterscheidet. Eine solche Ausführungsform wird gewählt, wenn es notwendig ist, den UV-Strahler zu kühlen. Im Zentrum des Deckels ist ein Lampenhalter 11' zu sehen.

## Patentansprüche

1. UV-Reaktor zur Einstrahlung von ultraviolettem Licht in ein Reaktionsmedium mit einem Gehäuse (4), welches einen rohrförmigen Hohlraum hat, in welchem ein ultraviolettes Licht durchlässiges Rohr (7) angeordnet ist, in welchem eine ultraviolettes Licht abgebende Quelle (16) angeordnet ist, wobei der zwischen der Wandung des Hohlraums und dem Rohr (7) ausgebildete Ringraum (8) wenigstens einen Einlaß (17) und einen Auslaß (18) für das Reaktionsmedium aufweist, wobei der Einlaß (17) so ausgebildet ist, daß das Reaktionsmedium tangential in den Ringraum (8) eintritt,
dadurch gekennzeichnet,
daß im Bereich der Stirnseiten des Ringraums (8) Anschlußelemente (1,2) angeordnet sind, in welchen der Einlaß (17) beziehungsweise der Auslaß (18) angeordnet ist, wobei die Anschlußelemente (1,2) als Flansche ausgebildet sind, welche den Ringraum (8) stirnseitig begrenzen.

2. UV-Reaktor nach Anspruch 1,
dadurch gekennzeichnet,
daß der Einlaß (17) beziehungsweise der Auslaß (18) in Richtung desselben Drehsinns angeordnet sind.

3. UV-Reaktor nach Anspruch 2,
dadurch gekennzeichnet,
daß der Einlaß 17) beziehungsweise der Auslaß (18) in einen im jeweiligen Anschlußelement (1,2) eingearbeiteten Verdrängungsspalt (13) einmündet.

4. UV-Reaktor nach Anspruch 3,
dadurch gekennzeichnet,
daß sich der Querschnitt im Verlauf des Verdrängungsspalts (13) verringert.

5. UV-Reaktor nach einem der Ansprüche 1 bis 4,
dadurch gekennzeichnet,
daß das Rohr (7) aus Quarzglas besteht.

6. UV-Reaktor nach einem der Ansprüche 1 bis 5,
dadurch gekennzeichnet,
daß die Wandung des Hohlraums des Gehäuses (4) mit einem UV-Strahlung reflektierenden Material beschichtet ist.

7. UV-Reaktor nach einem der Ansprüche 1 bis 6,
dadurch gekennzeichnet,
daß das Gehäuse (4) aus einem Material besteht, welches Strahlung ausschließich größerer Wellenlänge durchläßt.

## Claims

1. A UV-reactor for radiating ultraviolet light into a reaction medium, comprising a housing (4) having a tubular cavity in which there is arranged an ultraviolet light-transmissive tube (7) in which an ultraviolet light-producing source (16) is arranged, wherein the annular space (8) between the wall of the cavity and the tube (7) has at least one inlet (17) and outlet (18) for the reaction medium, wherein the inlet (17) is such that the reaction medium passes tangentially into the annular space (8), characterised in that arranged in the region of the ends of the annular space (8) are connecting elements (1, 2) in which the inlet (17) and the outlet (18) respectively are arranged, wherein the connecting elements (1, 2) are in the form of flanges which delimit the annular space (8) at the ends.

2. A UV-reactor according to claim 1 characterised in that the inlet (17) and the outlet (18) are arranged in the direction of the same direction of rotation.

3. A UV-reactor according to claim 2 characterised in that the inlet (17) and the outlet (18) respectively open into a displacement gap (13) which is provided in the respective connecting element (1, 2).

4. A UV-reactor according to claim 3 characterised in that the cross-section decreases in the course of the displacement gap (13).

5. A UV-reactor according to one of claims 1 to 4 characterised in that the tube (7) comprises quartz glass.

6. A UV-reactor according to one of claims 1 to 5 characterised in that the wall of the cavity of the housing (4) is coated with a UV-radiation-reflecting material.

7. A UV-reactor according to one of claims 1 to 6 characterised in that the housing (4) comprises a material which transmits radiation exclusively of greater wavelength.

## Revendications

1. Réacteur à UV pour irradier de lumière ultraviolette un milieu réactionnel, avec un boîtier (4) qui possède une cavité tubulaire dans laquelle est disposé un tube (7) laissant passer la lumière ultraviolette, dans lequel est disposée une source (16) délivrant de la lumière ultraviolette, l'espace annulaire (8) formé entre la paroi de la cavité et le tube (7) présentant au moins une admission (17) et une évacuation (18) pour le milieu réactionnel, l'admission (17) étant conçue de telle sorte que le milieu réactionnel pénètre tangentiellement dans l'espace annulaire (8),
**caractérisé** en ce que des éléments de raccordement (1, 2) sont disposés dans la région des côtés frontaux de l'espace annulaire (8), éléments dans lesquels sont respectivement disposées l'admission (17) et l'évacuation (18), les éléments de raccordement (1, 2) étant réalisés sous forme de flasques qui délimitent les côtés frontaux de l'espace annulaire (8).

2. Réacteur à UV selon la revendication 1, **caractérisé** en ce que l'admission (17) et l'évacuation (18) sont disposées en étant dirigées dans le même sens de rotation.

3. Réacteur à UV selon la revendication 2, **caractérisé** en ce que l'admission (17) et l'évacuation (18) débouchent respectivement dans une fente volumétrique (13) ménagée dans l'élément de raccordement (1, 2) respectif.

4. Réacteur à UV selon la revendication 3, **caractérisé** en ce que la section de la fente volumétrique (13) diminue dans la direction de développement de la fente.

5. Réacteur à UV selon une des revendications 1 à 4, **caractérisé** en ce que le tube (7) est réalisé en verre quartzeux.

6. Réacteur à UV selon une des revendications 1 à 5, **caractérisé** en ce que la paroi de la cavité du boîtier (4) est revêtue d'un matériau réfléchissant les rayons ultraviolets.

7. Réacteur à UV selon une des revendications 1 à 6, **caractérisé** en ce que le boîtier (4) est constitué d'un matériau qui laisse exclusivement passer le rayonnement de longueur d'onde supérieure.
